# EUROPÄISCHE PATENTSCHRIFT

(11) **EP 3 921 613 B1**
(45) Veröffentlichungstag und Bekanntmachung des Hinweises auf die Patenterteilung: **21.05.2025**
(21) Anmeldenummer: 20703157.6
(22) Anmeldetag: 23.01.2020
(51) Int. Cl.: G01J 3/42, G01N 21/31, G01J 3/10, G01J 3/02, G01J 3/18, G01J 3/20, G01J 3/22

(54) **ATOMABSORPTIONSSPEKTROMETER**
ATOMIC ABSORPTION SPECTROMETER
SPECTROMÈTRE D'ABSORPTION ATOMIQUE

(30) Priorität: 07.02.2019 DE 102019103035
(43) Veröffentlichungstag der Anmeldung: 15.12.2021
(73) Patentinhaber: Analytik Jena GmbH+Co. KG, 07745 Jena (DE)
(72) Erfinder: MOORE, Thomas, 07751 Jena-Drackendorf (DE); BRAUN, Marco, 07743 Jena (DE); HENTSCHEL, Martin, 07745 Jena (DE)
(74) Vertreter: Endress + Hauser Group Services (Deutschland) AG+Co. KG
(86) Internationale Anmeldenummer: PCT/EP2020/051629
(87) Internationale Veröffentlichungsnummer: WO 2020/160922

(56) Entgegenhaltungen:
- WO-A1-2012/123124
- US-A1- 2013 201 477
- SCHUETZ M ET AL: "Continuum source-atomic absorption spectrometry using a two-dimensional charge coupled device", SPECTROCHIMICA ACTA. PART B: ATOMIC SPECTROSCOPY, NEW YORK, NY, US, US, vol. 55, no. 12, 15 December 2000 (2000-12-15), pages 1895 - 1912, XP007908610, ISSN: 0584-8547, DOI: 10.1016/S0584-8547(00)00293-7

## Beschreibung

Die vorliegende Erfindung betrifft ein Atomabsorptionsspektrometer zur Analyse einer Probe mit den Merkmalen des Oberbegriffs des ersten Anspruchs. Ein gattungsgemäßes Atomabsorptionsspektrometer offenbart der Aufsatz "Continuum source-atomic absorption spectrometry using a two-dimensional charge coupled device" von M. Schuetz et al., Spectrochimica acta, Part B: Atomic Spectroscopy, Bd. 55, Nr. 12, 15. Dezember 2000, Seiten 1895 - 1912.

Die Atomabsorptionsspektrometrie betrifft die quantitative und qualitative Analyse eines bestimmten Elements in einer Probe. Die zugrundeliegenden Messprinzipien sind aus einer Vielzahl von Veröffentlichungen bekannt geworden und beispielsweise in "Atomabsorptionsspektrometrie" von Bernhard Welz und Michael Sperling (4. Auflage, WILEY-VCH Verlag GmbH, Weinheim) beschrieben.

Ein von einer Strahlungsquelle ausgehender Messstrahl wird zu einer Detektions-Einheit umfassend eine spektrometrische Anordnung und einen photoelektrischen Sensor, gelenkt. Dabei ist im Strahlengang des Messstrahls eine Atomisierungsvorrichtung angeordnet, in welcher die zu untersuchende Probe atomisiert wird, so dass ihre Bestandteile im atomaren Zustand vorliegen. Zur Überführung der Probe in die Gasphase sind verschiedene Methoden bekannt. Die Atomisierung kann beispielsweise durch eine Gasflamme erfolgen, in welche die zu analysierende Probe zerstäubt wird (Flammen-Atomabsorptionsspektrometrie (F-AAS)), durch elektrothermisches Erhitzen, üblicherweise in einem Graphitrohr (AAS mit elektrothermischer Aufheizung, oder auch Graphitrohrtechnik (GF-AAS)), durch chemisches Verdampfen mit anschließendem Erhitzen (Kaltdampf Technik (englisch cold vapour technique (CV- AAS) oder Hydrid-Technik (HS-AAS)), beispielsweise in einem Glasquarzrohr.

Die Schwächung des Messlichtbündels (Absorption) durch Wechselwirkung mit den freien Atomen der atomisierten Probe ist dann dem Lambert-Beerschen Gesetz entsprechend ein Maß für die Anzahl bzw. Konzentration des gesuchten Elements in der Probe.

Die erforderlichen spektralen Messwellenlängen λ in der Atomabsorptionsspektroskopie liegen zwischen λ=193 nm für Arsen und λ=852 nm für Caesium.

Im Idealfall wird der Messtrahl durch die anderen in der zu analysierenden Probe enthaltenen Elemente nicht beeinflusst. In vielen Fällen tritt jedoch neben der durch die freien Atome in der zu analysierenden Probe verursachten Absorption auch eine sogenannte Untergrundabsorption, beispielsweise infolge einer Absorption des Messstrahls durch Moleküle, auf. Zur Kompensation dieser Untergrundabsorption ist es mit Hinblick auf die Graphitrohrtechnik beispielsweise bekannt geworden, den Zeeman-Effekt auszunutzen, wie beispielsweise in den Dokumenten DE2165106C2, EP0363457B1 oder EP0364539B1 beschrieben. Eine weitere Möglichkeit besteht in der Nutzung einer breitbandigen Strahlungsquelle, wie einer Deuterium-Lampe als zweite Strahlungsquelle.

Die Detektions-Einheit wird dabei jeweils an die verwendete Strahlungsquelle angepasst und umfasst sowohl Mittel zur spektralen Auftrennung der Strahlung sowie zu deren Nachweis mittels einem oder mehrerer photoelektrischer Sensoren. Als spektrometrische Anordnung kommen beispielsweise Monochromatoren oder Polychromatoren zum Einsatz. Als photoelektrische Sensoren werden wiederum beispielsweise Sekundärelektronenvervielfacher, insbesondere Photomultiplier, oder CCD-Sensoren, CMOS-Sensoren, CID- Sensoren, oder auch Photodioden sowie Photodioden-Arrays verwendet.

Die Strahlungsquelle wiederum wird so gewählt, dass sie die Spektrallinien des jeweils gesuchten Elements enthält. Der genutzte Spektralbereich umfasst etwa den Welllängenbereich von 190nm bis 850nm. Besonders wichtig ist hierbei der Ultraviolett (UV)-Bereich, weil hier die meisten chemischen Elemente starke Absorptionslinien haben.

Häufig wird in Zusammenhang mit einem Atomabsorptionsspektrometer eine Hohlkathodenlampe eingesetzt, wie beispielsweise in DE1244956B beschrieben. Bei diesen Strahlungsquellen, bei welchen die Kathode jeweils aus dem zu bestimmenden chemischen Element besteht, handelt es sich um Linienstrahler, welche die zu messende Wellenlänge emittieren und Linienbreiten im pm-Bereich aufweisen. Die spektrale Auflösung wird also durch die Strahlungsquelle selbst definiert.

Bei der Verwendung von Hohlkathodenlampen wird jedoch für jedes zu messende Element eine elementspezifische Strahlungsquelle benötigt. Ändert sich das gewünschte Element, so muss die Strahlungsquelle getauscht werden. Dabei muss jeweils eine einfache Zugänglichkeit und Austauschbarkeit, sowie eine Unverwechselbarkeit der einzelnen Lampen gewährleistet werden.

Dies bringt verschiedene Nachteile mit sich: Einerseits sind Hohlkathodenlampen vergleichsweise teure, bruchempfindliche und großvolumige Speziallampen mit eingeschränkter Lebensdauer. Weiterhin wird zumeist jede Lampe auf Grund von unvermeidlichen Herstellungstoleranzen bei jedem Wechsel neu ausgerichtet. Die hierfür notwendigen Wechsel-Einrichtungen, mittels welcher sich die Strahlungsquelle automatisch oder durch den Anwender wechseln lässt, umfassen in der Regel viele mechanische Teile sowie ggf. Stellmotoren und eine Steuerelektronik. Dies geht mit einem hohen Platzbedarf ein her. Zudem ist die erreichbare Messgeschwindigkeit durch die jeweils notwendigen mechanischen Bewegungen beschränkt.

Der Austausch der Strahlungsquellen in Abhängigkeit des zu untersuchenden Elements macht es darüber hinaus erforderlich, die spektrometrische Anordnung, bei welcher es sich häufig um einen Monochromator mit einer Bandbreite im nm-Bereich handelt, jeweils passend einzustellen.

Als Alternative zu Hohlkathodenlampen ist ferner die Verwendung von Strahlungsquellen bekannt geworden, die ein kontinuierliches Spektrum zur Verfügung stellen. Dabei sind insbesondere leistungsstarke UV-Strahlungsquellen, wie die beispielsweise in DE112007000821T5 beschriebenen Xenon-Kurzbogenlampen, zu erwähnen. Derartige Strahlungsquellen werden im Unterschied zu den Hohlkathodenlampen in der Regel mit spektrometrischen Anordnungen umfassend einen Polychromator und mit photoelektrischen Sensoren in Form von Photodiodenmehrfachanordnungen, wie beispielsweise einem Photodioden-Array oder einer Photodiodenmatrix, betrieben. Die spektrale Auflösung wird also in diesem Fall durch die Detektions-Einheit erreicht, an welche entsprechend deutlich höhere Anforderungen zu stellen sind als im Falle von Strahlungsquellen in Form von Hohlkathodenlampen. Vorteilhaft bedarf es andererseits bei Strahlungsquellen mit kontinuierlichem Spektrum keiner zusätzlichen Strahlungsquelle für eine Kompensation der Untergrundabsorption. Die Untergrundkompensation erfolgt dabei üblicherweise simultan zur Messung der elementspezifischen Absorption.

Problematisch bei den UV-Hochleistungslampen, deren Wirkprinzip physikalisch dem der sogenannten "Schwarzen Strahler" entspricht, ist, dass sie in Folge des Wienschen Verschiebungsgesetzes bei extrem hohen Temperaturen betrieben werden müssen. Plasmatemperaturen von mehr als 10.000°K sind beispielsweise für die jeweils notwendige Strahlungsleistung im UV-Bereich notwendig. Diese Temperaturen sorgen aber auch für extrem hohe Lichtleistungen im visuellen Bereich. Außerdem haben UV-Hochleistungslampen nachteilig einen vergleichsweise hohen Stromverbrauch. Hochdrucklampen sind zudem gefährlich.

Als Alternative zu UV-Hochleistungslampen stehen zwar beispielsweise Deuteriumlampen zur Verfügung. Diese weisen allerdings wiederum erhebliche Nachteile hinsichtlich der zur Verfügung stehenden Strahlungsleistung auf. Deuteriumlampen verringern ihre Strahlungsleistung von der ersten Betriebsstunde an und sind nach ca. 12 Wochen Dauerbetrieb bei etwa der Hälfte der ursprünglichen Strahlungsleistung angelangt und damit nicht mehr sinnvoll nutzbar.

Um auch bei Verwendung von Hohlkathodenlampen mehrere Elemente ohne einen Austausch der Strahlungsquelle ermöglichen zu können, ist beispielsweise aus dem Dokument DE4413096 ist ein simultan messendes Multielement-Atomabsorptionsspektrometer bekannt geworden. Als Strahlungsquelle kommen mehrere Hohlkathodenlampen zum Einsatz, während die Detektions-Einheit ein Echelle-Polychromator sowie einen Halbleiterflächenempfänger umfasst. Die Verwendung eines Echelle-Polychromators dient dazu, das Überlappen der Signale der verschiedenen Hohlkathodenlampen zu vermeiden. Die Analyse mehrerer verschiedener Elemente wird durch ein Spiegelsystem erreicht, mittels welchem die Strahlung der einzelnen Hohlkathodenlampen derart gelenkt wird, dass von jeder Hohlkathodenlampe ein eingeschränkter Raumwinkelbereich zu einem Messstrahl zusammengefasst wird. Nachteilig ist dabei, dass die effektive Strahlungsleistung mit zunehmender Anzahl von Hohlkathodenlampen reduziert wird. Zudem ist die mögliche Anzahl an Hohlkathodenlampen aus konstruktiven Gründen deutlich beschränkt.

Eine Möglichkeit, die konstruktiven Beschränkungen zu überwinden, besteht in der Verwendung von Lichtleiterbündeln, wie beispielsweise in der DE3924060 beschrieben.

Eine weitere Alternative zur Vereinigung der verschiedenen Strahlungsquellen auf ein einziges Lichtbündel besteht in der Verwendung eines konkaven Gitters entlang eines sogenannten Rowland-Kreises, wie im Dokument DE3608468 offenbart. Durch diese Maßnahme wird erreicht, dass alle verwendeten Hohlkathodenlampen ihre Strahlungsleistung auf einen gemeinsamen Spalt abbilden.

Das Dokument DE102009003413A1 beschreibt ein Echelle-Spektrometer mit interner Vordispersion. Hier kann die Strahlungsintensität durch Verwendung einer sogenannten dispersiven Spaltanordnung geeignet an den Dynamikbereich des jeweiligen Detektors angepasst werden. In diesem Zusammenhang sei auch auf "High-Resolution Continuum Source AAS: The Better Way to Do Atomic Absorption Spectrometry" von Bernhard Welz, Helmut Becker-Roß und Uwe Heitmann (2005, WILEY-VCH, ISBN 3-527-30736-2) verwiesen.

Dort sind unter anderem Atomabsorptionslinien der verschiedenen chemischen Elemente sowie deren Bandbreite angegeben. Darüber hinaus wird sowohl theoretisch als auch experimentell dargestellt, welche Anforderungen ein polychromatisches Spektrometer für eine Strahlungsquelle, die ein kontinuierliches Spektrum zur Verfügung stellt, also für ein sogenanntes Continuum Source (CS-) Atomabsorptionsspektrometer, erfüllen sollte. Demnach betragen die durch Doppler- und Kollisions-Verbreiterungseffekte hervorgerufenen Halbwertsbreiten der Elemente z. B. 1,27 pm (Selen bei 196,026 nm) oder 2,54 pm (Magnesium bei 285,213 nm). Instrumentelle Bandbreiten Δλ von etwa dem Doppelten der Halbwertsbreite der Elemente sind für deren Erfassung geeignet. Dabei wird für ein Spektrometer, welches die Spektrallinien zweier Wellenlängen λ und |λ+Δλ| gerade noch trennen kann, das Auflösungsvermögen R üblicherweise als R= λ/ Δλ definiert.

Die Verwendung von Leuchtdioden als eine von mehreren Varianten von Lichtquellen offenbart beispielsweise die US 2013/0201477 A1. Die Verwendung von Hohlkathodenlampen, Laserdioden, Gasstrahlern oder mehrfarbigen Lichtquellen nennt beispielsweise die WO 2012/123124 A1.

Ausgehend vom Stand der Technik liegt der vorliegenden Erfindung die Aufgabe zugrunde, eine Strahlungsquelle für ein Atomabsorptionsspektrometer bereitzustellen, die robust und einfach zu betreiben ist.

Diese Aufgabe wird gelöst durch ein Atomabsorptionsspektrometer mit den Merkmalen des ersten Anspruchs.

Leucht- oder Lumineszenzdioden (LED) verfügen über hohe Strahlungsleistungen mit wohldefinierten Halbwertsbreiten, die je nach Schwerpunktwellenlänge der Leuchtdiode in einem Bereich von etwa 5-50 nm liegen. Entsprechend stellen sie ein kontinuierliches Spektrum bereit, das eine Multielement-Analyse ermöglicht. Die optische Strahlungsleistung steht dabei jeweils unmittelbar zur Verfügung, d.h. im Gegensatz zu anderen üblichen Strahlungsquellen müssen keine Einbrenn- oder Aufwärmzeiten abgewartet werden. Dies eröffnet die Möglichkeit, die Strahlungsquelle jeweils nur bedarfsabhängig einzuschalten, was wiederum die Lebensdauer verlängert.

Dabei ist die Strahlungsleistung, die über den Betriebsstrom einstellbar ist, jeweils auf den spektralen Wellenlängenbereich der verwendeten Leuchtdiode beschränkt.

Entsprechend wird der jeweilige Detektor nicht durch andere, insbesondere störende, Wellenlängen beaufschlagt. Zudem wird das Auftreten von Streulicht signifikant reduziert. Die Möglichkeit, Leuchtdioden mit Linsen oder Fasern mit Schnittweiten im Submillimeter-Bereich zu kombinieren ermöglicht ferner die Übertragung vergleichsweise großer numerischer Aperturen.

Weiterhin zeichnen sich Leuchtdioden durch ihre Kompaktheit aus - der benötigte Bauraum liegt häufig im Bereich weniger Kubikmillimeter. Zudem handelt es sich bei Leuchtdioden um robuste Bauteile, die vergleichsweise unempfindlich gegenüber mechanischen Störeinflüssen, wie beispielsweise mechanische Stöße oder Schwingungen, und auch gegenüber anderen Umgebungseinflüssen, wie beispielsweise der jeweiligen Umgebungstemperatur, sind. Weitere Vorteile bei der Verwendung von Leuchtdioden bestehen darin, dass sie kostengünstig, langlebig und energieeffizient sind. Verglichen mit Temperaturstrahlern wird beispielsweise wenig Verlustwärme in das jeweilige optische System übertragen, so dass an das optische System geringere Anforderungen hinsichtlich des Kompensierens und/oder Tolerierens von Temperaturdrift zu stellen sind. Beispielsweise kommen einzelne Leuchtdioden mit einer passiven Kühlung aus oder können mit vergleichsweise kompakten Peltier-Elementen temperiert werden. Auch die Stromversorgung von Leuchtdioden ist deutlich einfacher als im Fall von herkömmlichen in Zusammenhang mit Atomabsorptionsspektrometern genutzten Strahlungsquellen.

Insgesamt ermöglicht die Verwendung von Leuchtdioden einen wesentlich robusteren und kompakteren Aufbau der Strahlungsquelle bei niedrigeren Herstellkosten. Zumal ist ein Betreiben des Spektrometers, insbesondere hinsichtlich der Einstellung der Strahlungsquellen-Einheit und der Detektions-Einheit auf einfache Weise möglich. Dies erweitert deutlich den Anwendungsbereich hin zu Analysen in industriellen Prozessen, die häufig eine kontinuierliche Überwachung bedürfen. Ein mögliches Anwendungsbeispiel ist die Kontrolle der Metallionenbelastung in trüben Abwässern, die fortlaufend überwacht und ggf. geklärt bzw. aufgearbeitet werden muss.

Der jeweilige Wellenlängenbereich der verwendeten Leuchtdiode kann anwendungsspezifisch gewählt werden. Insbesondere sind zahlreiche Leuchtdioden mit Wellenlängen im UV-Bereich verfügbar.

In einer Ausgestaltung können mehrere Leuchtdioden lateral nebeneinander oder entlang einer Kreisbahn angeordnet werden.

Weist die spektrometrische Anordnung einen Eingangspalt auf, so dient die Positioniervorrichtung insbesondere der Positionierung der einzelnen Leuchtdioden relativ zum Eingangspalt. Im Vergleich zu aus dem Stand der Technik bekannten Positioniervorrichtungen reichen für die vorliegende Erfindung mechanische Verfahrwege im Bereich von wenigen Millimetern aus. Dies vereinfacht die Aufbauten beträchtlich. Zudem können deutlich kürzere Stellzeiten zur Ausrichtung realisiert werden.

In einer bevorzugten Ausgestaltung handelt es sich bei der Polychromator-Anordnung um eine spektrometrische Anordnung mit einem Auflösungsvermögen im Picometer-Bereich oder weniger, insbesondere handelt es sich um eine spektrometrische Anordnung mit einem Auflösungsvermögen von R=50000 bis R=150000.

In dieser Hinsicht ist es wiederum von Vorteil, wenn die Polychromator-Anordnung ein Echelle-Spektrometer, ein Rowlandkreis-Spektrometer oder ein Virtually Imaged Phased Array Spektrometer umfasst. Derartige Polychromator-Anordnungen können über eine Eintrittsöffnung, insbesondere einen Eingangsspalt, oder über mehrere, vorzugsweise gegeneinander versetzte, Eintrittsöffnungen, insbesondere Eingangsspalte, verfügen.

Für eine spektrometrische Anordnung mit einem Polychromator bietet sich als Detektor eine Photodiodenmehrfachanordnung, wie beispielsweise ein Photodiodearray oder einer Photodiodenmatrix an.

Eine bevorzugte Ausgestaltung beinhaltet, dass die Strahlungsquellen-Einheit die zumindest eine Leuchtdiode und zumindest eine Hohlkathodenlampe oder UV-Strahlungsquelle umfasst. In diesem Falle kann die Leuchtdiode beispielsweise zur Kompensation der Hintergrundstrahlung verwendet werden, während der eigentliche Messstrahl durch die Hohlkathodenlampe oder UV-Strahlungsquelle zur Verfügung gestellt wird. Dies erlaubt eine im Vergleich zum Stand der Technik vereinfachten Aufbaus als im Falle einer Deuterium-Lampe zur Hintergrundkompensation.

Zusammenfassend erlaubt es die vorliegende Erfindung, den für die jeweils angedachten Anwendungen notwendigen Spektralbereiche passend zusammenzustellen. Hier sind unterschiedlichste Varianten denkbar. Beispielsweise kann eine leistungsstarke Leuchtdiode, welche im visuellen Spektrum arbeitet, mit einer oder mehrerer spezifischer Leuchtdioden im UV-Bereich kombiniert werden. So kann beispielsweise erreicht werden, dass das Licht der in der Regel leistungsschwächeren UV-Leuchtdioden möglichst verlustfrei zur Detektions-Einheit gelenkt werden kann. Beispielsweise kann der Spektralbereich von ca. 210 nm bis in den NIR-Bereich hinein sukzessive in vorgebbaren Wellenlängenabständen durch verschiedene AlGaN-, InAlGaN-, InGaN-Leuchtdioden zusammengestellt werden. Auch ist es möglich, frequenzverdoppelte Laserdioden für spezielle Spektralbereiche zu verwenden. Um unterschiedlichen Intensitäten unterschiedlicher Leuchtdioden Rechnung zu tragen, können ferner Luminophore eingesetzt werden.

Dabei können sequentielle Analysen auf unterschiedlichste Arten erreicht werden.

Die Erfindung wird im Folgenden anhand der Figuren näher erläutert. Es zeigt
- Fig. 1:: eine schematische Darstellung eines Atomabsorptionsspektrometers gemäß Stand der Technik in Form eines (a) auf der Graphitrohrtechnik basierenden Atomabsorptionsspektrometers, und (b) eines Flammen-Atomabsorptionsspektrometers,
- Fig. 2:: mögliche Ausgestaltungen für eine Strahlungsquellen-Einheit mit (a) einer Leuchtdiode, (b) mehreren Leuchtdioden und (c-e) Anpassung der Geometrie an die Geometrie der Detektionseinheit,
- Fig. 3: mögliche Ausgestaltungen für eine Strahlungsquellen-Einheit unter Verwendung eines Trägerelements (a) ohne und (b,c) mit geometrischer Anpassung an die Detektions-Einheit, sowie verschiedene Optionen zur Positionierung einzelner Leuchtdioden relativ zur Detektions-Einheit, und
- Fig. 4: eine bevorzugte Ausgestaltung für eine Detektions-Einheit in Form eine Littrow-Anordnung mit gekreuzter Echelle-Gitter-Struktur.

In den Figuren sind gleiche Elemente jeweils mit demselben Bezugszeichen versehen.

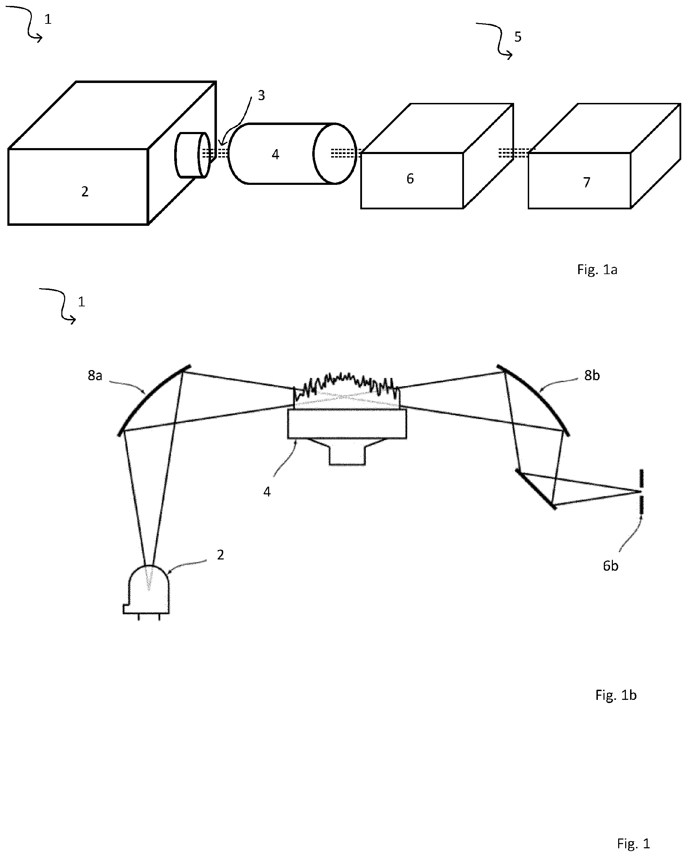

In Fig. 1 ist eine schematische Darstellung eines Atomabsorptionsspektrometers 1 unter Verwendung der Graphitrohrtechnik gezeigt. Ausgehend von der Strahlungsquellen-Einheit 2 wird ein Messstrahl 3 ausgesendet, welcher die Atomisiervorrichtung 4 in Form eines Graphitrohres durchläuft. In der Atomisiervorrichtung 4 befindet sich eine atomisierte, zu untersuchende Probe. Die Strahlungsquellen-Einheit 2 weist zumindest eine Lampe auf, die derart gewählt ist, dass der Messstrahl 3 die Spektrallinien des gesuchten Elements in der Probe enthält. Durch Absorption des Messstrahls 3 kommt es zu einer Schwächung, welche in einer auf die Atomisierungsvorrichtung 4 folgenden Detektions-Einheit 5 detektierbar ist. Die Detektions-Einheit 5 umfasst eine spektrometrische Anordnung 6 und einen optoelektronischen Sensor 7, welcher optional über eine integrierte oder angeschlossene Auswerteelektronik verfügt.

Im Gegensatz zu dem Atomabsorptionsspektrometer 1 aus Fig. 1a handelt es sich bei dem in Fig. 1b gezeigten Spektrometer um ein Flammen-Absorptionsspektrometer 1. Das gezeigte Spektrometer 1 weist zusätzlich zu bereits in Zusammenhang mit Fig. 1a beschriebenen Komponenten ein Spiegelsystem 8 mit zwei Spiegeln 8a, 8b zur Führung des Messstrahls 3 auf. Ferner ist in Fig. 1b die spektrometrische Anordnung 6, bei der es sich beispielsweise um einen Mono- oder Polychromator handeln kann, exemplarisch durch einen Eintrittsspalt 6b dargestellt, durch welchen der Messstrahl 3 in die Detektions-Einheit 5 gelangt.

Als Leuchtdioden können im Zusammenhang mit der vorliegenden Erfindung verschiedenste aus dem Stand der Technik bekannte Ausgestaltungen verwendet werden. Bevorzugt werden planare Leuchtdioden, kanten- bzw. randabstrahlende Leuchtdioden, oder auch Kuppelleuchtdioden eingesetzt.

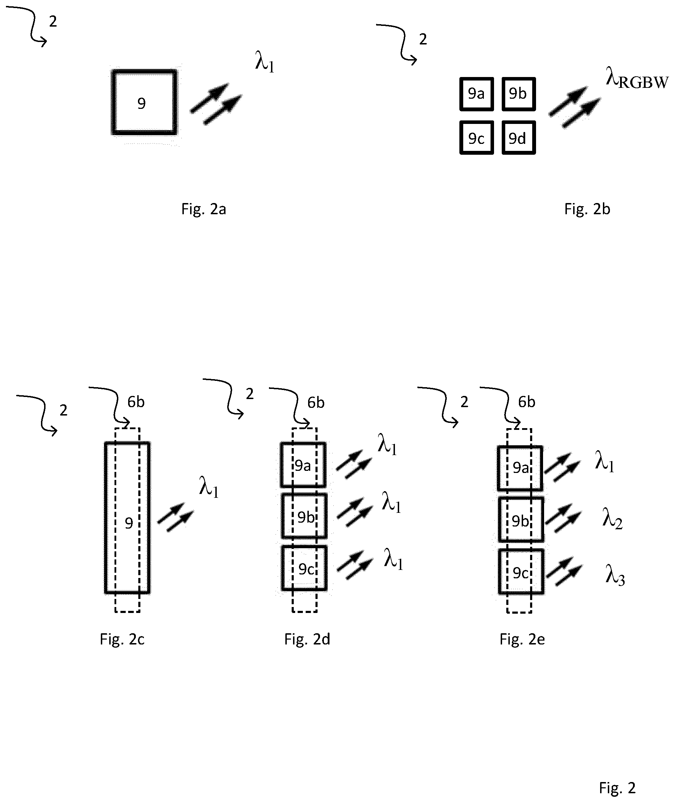

In der nicht erfindungsgemäßen Ausgestaltung der Fig. 2a ist eine planare Leuchtdiode 9, welche Licht der Wellenlänge λ₁ erzeugt. Der jeweilige Spektralbereich der Leuchtdiode 9 kann dabei anwendungsspezifisch gewählt werden. Insbesondere ist der UV-Bereich interessant, da viele für eine Analyse interessante Elemente in diesem Bereich ihre Spektrallinien aufweisen.

Es können im Zusammenhang mit der vorliegenden Erfindung auch mehrere Leuchtdioden 9a-9d verwendet werden, wie in Fig. 2b dargestellt. Diese können wiederum jeweils Licht mit unterschiedlichen Wellenlängen λ₁ - λ₄ erzeugen. Im Falle der Ausgestaltung gemäß Fig. 2b sind die einzelnen Leuchtdioden 9a-9d beispielsweise so gewählt, dass sie zusammen Licht in einem breiten Wellenlängenbereich λ_{RGBW} erzeugen.

Es ist von Vorteil, wenn die Geometrie der Leuchtdiode 9 so gewählt ist, dass sie an die geometrischen Gegebenheiten der Detektions-Einheit 5 angepasst ist. Im Falle, dass die spektrometrische Anordnung 6 einen Eingangsspalt 6b aufweist und/oder im Falle einer stigmatisch abbildenden optischen Anordnung, ist es demnach von Vorteil, wenn die Leuchtdiode 9 eine zur Geometrie des Eingangsspalts 6b korrespondierende Geometrie aufweist, wie in Fig. 2c skizziert. Dies erlaubt eine optimale Ausleuchtung des Sensors 7. Um eine optimale Ausleuchtung des Sensors erzielen zu können, kann aber auch auf eine anamorphotische Anordnung zurückgegriffen werden.

Im Falle, dass erfindungsgemäß mehrere Leuchtdioden 9a,9b,... verwendet werden, ist es einerseits denkbar, dass jede Leuchtdiode 9 bezüglich ihrer Geometrie an die Geometrie der Detektionseinheit angepasst ist, also dass jede Leuchtdiode 9a,9b,... entsprechend der in Fig. 2c dargestellten Variante ausgebildet ist. Es ist in diesem Zusammenhang aber ebenfalls denkbar, die Strahlungsquellen-Einheit 2 derart auszugestalten, dass die Vielzahl von verwendeten Leuchtdioden 9a-9c in ihrer Gesamtheit an die Geometrie der Detektions-Einheit 5, insbesondere an die Geometrie des Eingangsspalts 6b der spektrometrischen Anordnung 6, angepasst sind, wie in den Figuren Fig. 2d und Fig. 2e für den Fall der Verwendung von drei Leuchtdioden 9a-9c dargestellt. Hier ist es wiederum einerseits denkbar, dass alle Leuchtdioden 9a-9c Licht der gleichen Wellenlänge λ₁ erzeugen, wie im Fall der Fig. 2d. Andererseits können die Leuchtdioden 9a-9c teilweise oder alle Licht unterschiedlicher Wellenlängen λ₁ - λ₃ erzeugen, wie im Fall der Fig. 2e.

Durch die Anordnung mehrere Leuchtdioden 9a,9b,9c nebeneinander, wie im Fall der Fig. 2e lassen sich unterschiedliche Teilbereiche T1, T2 des Sensors 7 jeweils mit dem Licht der unterschiedlichen Wellenlängen λ₁ - λ₃ ausleuchten. Dies erlaubt eine simultane Multielement-Analyse des entsprechend ausgestalteten Atomabsorptionsspektrometers 1.

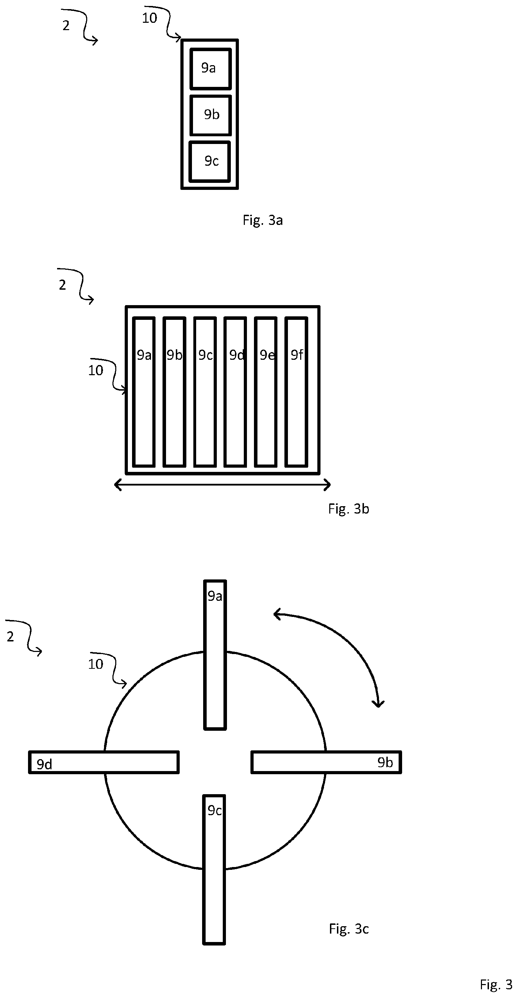

Erfindungsgemäß sind die unterschiedlichen Leuchtdioden 9a,9b,... gemeinsam auf einem Trägerelement 10 angeordnet, wie in Fig. 3 für den Fall einer Ausgestaltung gemäß Fig. 2e beispielhaft gezeigt. Für die nicht erfindungsgemäße Ausgestaltung aus Fig. 3a handelt es sich um ein Trägerelement 10, welches relativ zur Detektions-Einheit 5 fest positionierbar ist, da mit einer Position des Trägerelements 10 alle Leuchtdioden 9a-9c zur Analyse der jeweiligen Probe nutzbar sind.

Erfindungsgemäß ist die Strahlungsquellen-Einheit 2 derart ausgestaltet, dass ein sequentieller Betrieb der einzelnen Leuchtdioden 9a,9b,... erreicht wird, wie in den Figuren Fig. 3b und Fig 3c dargestellt. Für die Ausgestaltung aus Fig. 3b sind beispielsweise sechs Leuchtdioden 9a-9f nebeneinander auf dem Trägerelement 10 angeordnet. Das Trägerelement 10 ist hier Teil einer nicht gezeigten PositionierEinheit, mittels welcher für die hier gezeigte Ausgestaltung eine laterale Bewegung des Trägerelements 10 relativ zur Detektions-Einheit 5 realisierbar ist, wie durch den Pfeil angedeutet. So können nacheinander die unterschiedlichen Leuchtdioden 9a-9f derart positioniert werden, dass sie jeweils den Sensor 7 ausleuchten, um verschiedene Elemente in der Probe zu analysieren. Neben einer lateralen Bewegung sind auch andere Möglichkeiten zur Bewerkstelligung einer sequentiellen Positionierung der einzelnen Leuchtdioden 9a-9f denkbar.

Beispielhaft ist in Fig. 3c eine Anordnung von vier auf einem runden Trägerelement 10 angeordneten Leuchtdioden 9a-9d gezeigt, welche durch eine Kreisbewegung des Trägerelements 10 jeweils relativ zur Detektions-Einheit positionierbar sind.

Im Rahmen der vorliegenden Erfindung handelt es sich bevorzugt um eine spektrometrische Anordnung 6 mit hoher spektraler Auflösung, bevorzugt beträgt die Auflösung wenige Picometer. Verschiedene, im Kontext der vorliegenden Erfindung grundsätzlich geeignete, spektrometrische Anordnungen sind dem Fachmann beispielsweise aus Wilfried Neumann, "Fundamentals of dispersive optical Spectroscopy Systems" (SPIE-Monograph, ISBN Nr.: 9780819498243) bekannt.

Im Falle einer Strahlungsquellen-Einheit 2 mit zumindest einer Leuchtdiode 9 sind herkömmliche monochromatische spektrale Anordnungen in der Regel eher ungeeignet, da sie sequentiell entsprechend der Bandbreite der Leuchtdiode 9 durchgestimmt werden müssen. Insbesondere transiente Absorptionsereignisse, wie sie bei der Graphit-Rohr-Technik zu messen sind, erfordern den Einsatz von spektralen Anordnungen 6 in Form von Polychromatoren, welche bevorzugt in Kombination mit schnell auslesbaren optoelektronischen Multipixel-Sensoren 7 eingesetzt werden. Beispiele für derartige spektrometrische Anorndungen 6 sind beispielsweise das Rowland-Kreis Spektrometer, das Virtually Imaged Phased Array Spectrometer oder auch das Echelle-Spektrometer.

Echelle-Spektrometer mit Echelle-Gittern verfügen über eine hohe spektrale Auflösung, welche auf der Nutzung hoher Ordnungszahlen beruht. Allerdings sind jeweils auf Grund der damit verbundenen spektralen Überlappung zusätzliche Maßnahmen zur Ordnungstrennung notwendig. Deswegen werden die Echelle-Gitter häufig in Kombination mit Prismen, Gittern oder Grisms kombiniert.

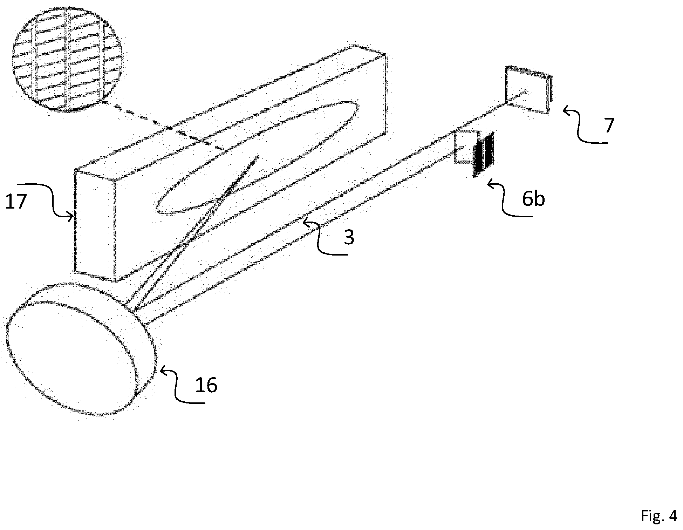

Fig. 4 zeigt eine bevorzugte Ausgestaltung für eine Detektions-Einheit 5 in Form eine Littrow-Anordnung mit gekreuzter Echelle-Struktur, in welcher ein querdispersives Element zur Ordnungstrennung integriert ist. Ein Messstrahl 3 durchläuft einen Eingangsspalt 6b der spektrometrischen Anordnung, wird an einem konkaven Spiegel 16 kollimiert, passiert das gekreuzte Echelle-Gitter 17, und wird dann erneut über den konkaven Spiegel 16 zum Sensor 7 fokussiert.

### Bezugszeichen

- 1: Atomabsorptionsspektrometer
- 2: Strahlungsquellen-Einheit
- 3: Messstrahl
- 4: Atomisiervorrichtung
- 5: Detektions-Einheit
- 6: spektrometrische Anordnung
- 6b: Eintrittsöffnung, Eintrittsspalt
- 7: Sensor
- 8: Spiegelsystem
- 8a,8b: Spiegel
- 9, 9a,9b...: Leuchtdiode
- 9x: Gesamt-Messtrahl
- 10: Trägerelement
- 11: optisches System
- 12a, 12b: Interferenzfilter
- 13a-13c: Y-Koppler
- 14: Gitter
- 15: Lichtmischstab
- 16: konkaver Spiegel
- 17: Echelle-Gitter

- λ, λ₁, λ₂,...: Wellenlängen
- T1, T2: Teilbereiche
- F: Fläche

## Patentansprüche

1. Atomabsorptionsspektrometer (1) zur Analyse einer Probe, umfassend eine Strahlungsquellen-Einheit (2) zur Erzeugung eines Messstrahls (3), eine Atomisierungs-Einheit (4) zur Atomisierung der Probe derart, dass sich die atomisierte Probe in einem Strahlengang des Messstrahls (3) befindet, und
eine Detektions-Einheit (5) zur Erfassung einer Absorption des Messstrahls (3),
wobei die Detektions-Einheit (5) eine Polychromator-Anordnung als spektrometrische Anordnung (6) umfasst,
**dadurch gekennzeichnet,**
**dass** die Strahlungsquellen-Einheit (2) zumindest zwei Leuchtdioden (9a, 9b) umfasst,
**dass** die zumindest zwei Leuchtdioden (9a,9b) gemeinsam auf einem Trägerelement (10) angeordnet sind,
**dass** das Trägerelement (10) Teil einer Positioniervorrichtung ist, mittels welcher die zumindest zwei Leuchtdioden (9a,9b) so relativ zur Detektions-Einheit (5) positionierbar sind, dass für einen sequentiellen Betrieb der Leuchtdioden (9a, 9b) jeweils eine Leuchtdiode (9a, 9b) ausgewählt und relativ zur Detektions-Einheit (5) passend positioniert ist,
wobei eine erste Leuchtdiode (9a) Licht zumindest einer ersten Wellenlänge (λ₁) oder mit Wellenlängen innerhalb eines ersten Wellenlängenbereichs erzeugt, und
wobei die zweite Leuchtdiode (9b) Licht zumindest einer zweiten, sich von der ersten unterscheidenden, Wellenlänge (λ₂) oder mit Wellenlängen innerhalb eines zweiten, sich zumindest teilweise von dem ersten Wellenlängenbereich unterscheidenden Wellenlängenbereichs erzeugt.

2. Atomabsorptionsspektrometer (1) nach Anspruch 1,
wobei die zumindest zwei Leuchtdioden (9a,9b) lateral nebeneinander oder entlang einer Kreisbahn angeordnet sind.

3. Atomabsorptionsspektrometer (1) nach Anspruch 1 oder 2,
wobei es sich bei der Polychromator-Anordnung als spektrometrische Anordnung (6) um eine Anordnung mit einem Auflösungsvermögen R= λ/ Δλ im Picometer-Bereich oder weniger handelt, und
wobei λ und λ +Δλ die Wellenlängen zweier Spektrallinien sind, die gerade noch getrennt werden können.

## Claims

1. Atomic absorption spectrometer (1) for analyzing a sample, comprising
a radiation source unit (2) for generating a measuring beam (3),
an atomization unit (4) for atomizing the sample in such a way that the atomized sample is located in a beam path of the measuring beam (3), and
a detection unit (5) for detecting absorption of the measuring beam (3),
the detection unit (5) comprising a polychromator arrangement as a spectrometric arrangement (6),
**characterized in**
**that** the radiation source unit (2) comprises at least two light-emitting diodes (9a, 9b),
the at least two light-emitting diodes (9a, 9b) are arranged together on a carrier element (10),
**that** the carrier element (10) is part of a positioning device by means of which the at least two light-emitting diodes (9a, 9b) can be positioned relative to the detection unit (5) in such a way that, for sequential operation of the light-emitting diodes (9a, 9b) one light-emitting diode (9a, 9b) is selected and appropriately positioned relative to the detection unit (5),
with a first light-emitting diode (9a) generating light of at least a first wavelength (λ₁) or with wavelengths within a first wavelength range, and
wherein the second light-emitting diode (9b) generates light of at least one second wavelength (λ₂) differing from the first wavelength or with wavelengths within a second wavelength range differing at least partially from the first wavelength range.

2. Atomic absorption spectrometer (1) according to Claim 1,
wherein the at least two light-emitting diodes (9a, 9b) are arranged laterally next to one another or along a circular path.

3. Atomic absorption spectrometer (1) according to claim 1 or 2,
wherein the polychromator arrangement as the spectrometric arrangement (6) is an arrangement with a resolving power R= λ/ Δλ in the picometer range or less, and
wherein λ and λ +Δλ are the wavelengths of two spectral lines which can just be separated.

## Revendications

1. Spectromètre d'absorption atomique (1) pour l'analyse d'un échantillon, comprenant une unité de source de rayonnement (2) pour générer un faisceau de mesure (3),
une unité d'atomisation (4) pour atomiser l'échantillon de telle sorte que l'échantillon atomisé se trouve dans un trajet du faisceau de mesure (3), et
une unité de détection (5) pour détecter une absorption du faisceau de mesure (3),
l'unité de détection (5) comprenant un dispositif polychromateur en tant que dispositif spectrométrique (6),
**caractérisé en ce**
**que** l'unité de source de rayonnement (2) comprend au moins deux diodes électroluminescentes (9a, 9b),
**que** les deux diodes électroluminescentes (9a, 9b) au moins sont disposées ensemble sur un élément porteur (10),
**que** l'élément porteur (10) fait partie d'un dispositif de positionnement au moyen duquel les deux diodes électroluminescentes (9a, 9b) au moins peuvent être positionnées par rapport à l'unité de détection (5) de telle sorte que, pour un fonctionnement séquentiel des diodes électroluminescentes (9a, 9b) une diode électroluminescente (9a, 9b) est sélectionnée et positionnée de manière appropriée par rapport à l'unité de détection (5),
une première diode électroluminescente (9a) générant de la lumière d'au moins une première longueur d'onde (λ₁) ou avec des longueurs d'onde comprises dans une première plage de longueurs d'onde, et
la deuxième diode électroluminescente (9b) produisant de la lumière d'au moins une deuxième longueur d'onde (λ₂), différente de la première, ou avec des longueurs d'onde à l'intérieur d'une deuxième plage de longueurs d'onde, différente au moins en partie de la première plage de longueurs d'onde.

2. Spectromètre d'absorption atomique (1) selon la revendication 1,
dans lequel les deux diodes électroluminescentes (9a, 9b) sont disposées latéralement l'une à côté de l'autre ou le long d'une trajectoire circulaire.

3. Spectromètre d'absorption atomique (1) selon la revendication 1 ou 2,
le dispositif polychromateur en tant que dispositif spectrométrique (6) étant un dispositif ayant un pouvoir de résolution R =λ/Δλ de l'ordre du picomètre ou moins, et
où λ et λ + Δλ sont les longueurs d'onde de deux raies spectrales qui peuvent encore être séparées.
